(19) Europäisches Patentamt / European Patent Office / Office européen des brevets

(11) **EP 1 651 485 B1**

(12) **EUROPÄISCHE PATENTSCHRIFT**

(45) Veröffentlichungstag und Bekanntmachung des Hinweises auf die Patenterteilung:
**28.11.2007  Patentblatt 2007/48**

(21) Anmeldenummer: **04766344.8**

(22) Anmeldetag: **28.07.2004**

(51) Int Cl.:
*B60T 8/36* (2006.01)       *H01F 7/18* (2006.01)

(86) Internationale Anmeldenummer:
**PCT/EP2004/051635**

(87) Internationale Veröffentlichungsnummer:
**WO 2005/012055 (10.02.2005 Gazette 2005/06)**

(54) **VERFAHREN UND VORRICHTUNG ZUR HERSTELLUNG UND/ODER JUSTAGE EINES ELEKTROMAGNETISCH ANSTEUERBAREN STELLGERÄTS**

METHOD AND DEVICE FOR PRODUCING AND/OR ADJUSTING AN ELECTROMAGNETICALLY CONTROLLABLE ACTUATOR

PROCEDE ET DISPOSITIF POUR PRODUIRE ET/OU AJUSTER UN ACTIONNEUR POUVANT ETRE COMMANDE DE MANIERE ELECTROMAGNETIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **31.07.2003   DE 10335586**
**25.11.2003   DE 10355388**
**26.11.2003   DE 10355836**

(43) Veröffentlichungstag der Anmeldung:
**03.05.2006   Patentblatt 2006/18**

(73) Patentinhaber: **Continental Teves AG & Co. oHG 60488 Frankfurt am Main (DE)**

(72) Erfinder:
• **HEINZ, Micha**
**64293 Darmstadt (DE)**
• **RICHTER, Andreas**
**61267 Neu-Anspach (DE)**
• **JÖCKEL, Wolfgang**
**63179 Obertshausen (DE)**
• **SCHMITZ, Axel**
**65795 Hattersheim (DE)**
• **STEINBACH, Claude**
**60596 Frankfurt (DE)**
• **DÖRDELMANN, Philipp**
**61352 Bad Homburg (DE)**
• **SIMON, Winfried**
**61209 Echzell (DE)**
• **FEY, Wolfgang**
**65527 Niedernhausen (DE)**
• **ENGELMANN, Mario**
**61449 Steinbach/Ts. (DE)**
• **KETEL, Andreas**
**65201 Wiesbaden (DE)**

(56) Entgegenhaltungen:
**EP-A- 1 069 284          DE-A- 3 633 107**
**DE-A- 3 730 523          DE-A- 4 011 217**
**DE-A- 19 736 773         US-A- 4 368 501**

**Beschreibung**

Die Erfindung betrifft ein Verfahren gemäß Oberbegriff von Anspruch 1 sowie eine Justagevorrichtung gemäß Oberbegriff von Anspruch 12.

Es ist bekannt, in ABS-Steuergeräten für Kraftfahrzeugbremssysteme, aber auch in sogenannten Fahrdynamikreglern mit zusätzlichen Funktionen wie ESP etc., elektromagnetisch ansteuerbare analogisierte Ventile für eine verbesserte Regelung bzw. zur Geräuschminderung einzusetzen.

In neueren Generationen von Hydraulikregelvorrichtungen werden sogenannte analogisierte Schaltventile eingesetzt. Ein analogisiertes Schaltventil ist ein stromangesteuertes Magnetventil, welches an sich zum vollständigen Öffnen oder Schließen ausgelegt ist, jedoch durch gezielte Stromeinstellung so betrieben wird, dass dieses analoge Regeleigenschaften besitzt.

Ein Verfahren zur Erkennung des Schaltpunktes eines analog einsetzbaren Schaltventils, insbesondere zur Bestimmung der Druckverhältnisse aus dem Stromverlauf des Ventilansteuerstromes, geht aus der EP 0 813 481 B1 (P 7565) hervor.

In der WO 02/33425 A1 wird eine Vorrichtung zur Überwachung der Spulenströme mehrerer, getrennt ansteuerbarer Magnetspulen offenbart, welche über eine Strommesselement gemeinsam an eine Stromquelle angebunden sind.

Im Prinzip lässt sich demzufolge der Druckgradient oder Durchfluss G eines entsprechenden analogisierten Schaltventils in Abhängigkeit vom Differenzdruck durch Variation des Stroms durch die Magnetspule des Ventils einstellen. Die Einstellung des Volumenstroms Q im Bereich der Regelung muss sehr genau durchgeführt werden. Die wesentlichen Einflussgrößen sind der Differenzdruck $\Delta p$, der Strom I durch die Magnetspule des Ventils sowie verschiedene Ventilparameter.

Die Verwendung von Kennfeldern zum Festlegen des gewünschten Durchflusses ist zwar möglich, jedoch lässt sich die Abhängigkeit der obigen Größen nicht ohne weiteres in einem einmal festgelegten Kennfeld ablegen. Dies liegt daran, dass der Einfluss von fertigungsbedingten Toleranzen der Ventilbauteile auf den nötigen Ansteuerstrom relativ groß ist. Daher ist es erforderlich, während der Fertigung der Ventile für jedes Ventil individuell ein Kennfeld zu bestimmen und dieses in einem Speicher der Elektronik des Steuergeräts abzulegen. Zur Erstellung der individuellen Kennfelder ist jedoch ein aufwändiges Messverfahren mit definierten Druckbeaufschlagungen der Steuergeräte beim Zulieferer oder am Bandende beim Kraftfahrzeughersteller nötig. Die durch das aufwändige Messverfahren ermittelten Kennfelder können dann, wie dies beispielsweise in der WO 01/98124 A1 (P 9896) beschrieben ist, zur Einstellung des gewünschten Druckgradienten herangezogen werden.

Es hat sich nun gezeigt, dass die Ursachen für die verbleibenden Streuungen der Kennlinien bzw. insbesondere deren Gradienten überwiegend von den Toleranzen der Mechanik, z.B. der schwankenden Federkraft, und des magnetischen Feldlinienkreises (z.B. magnetische Widerstände der Luftspalte etc.) herrühren. Daher besteht der Bedarf an Ventilen, welche in einer Serienproduktion eine möglichst geringe Streuung in den elektromagnetischen und mechanischen Eigenschaften haben.

Diese Aufgabe wird erfindungsgemäß gelöst durch das Verfahren gemäß Anspruch 1 und die Justagevorrichtung gemäß Anspruch 12.

Gemäß dem Verfahren nach der Erfindung wird zumindest eine elektromagnetische Eigenschaft des Stellgeräts gemessen und die gemessene elektromagnetische Eigenschaft selbst oder eine daraus abgeleitete Größe als Istwert für eine Regelung einer Einstellgröße verwendet. Diese Einstellgröße wird außerdem direkt zur Herstellung oder Justage des Stellgeräts herangezogen.

Die Begriffe "Regeln" und "Regelung" beziehen sich auf einen Vorgang, bei dem eine Größe, die zu regelnde Größe (Regelgröße, Istwert), fortlaufend erfasst, mit einer anderen Größe, der Führungsgröße (Sollwert), verglichen und im Sinne einer Angleichung der Führungsgröße beeinflusst wird. Kennzeichnend für das Regeln ist der geschlossene Wirkungsablauf, bei dem die Regelgröße im Wirkungsweg des Regelkreises fortlaufend sich selbst beeinflusst.

Die Regelung wird vorzugsweise mittels eines programmierbaren elektronischen Regler durchgeführt. Die Einstellgröße ist insbesondere der weiter unten definierte Stößelhub 1 und/oder ein Luftspalt in der magnetischen Anordnung.

Unter dem Begriff Stellgeräte werden Ventile und Schieber zum Einstellen eines Fluiddurchflusses verstanden. Besonders bevorzugt handelt es sich bei dem eingesetzten Stellgerät um ein Ventil. Als bevorzugtes Fluid kommt neben Luft auch eine geeignete Hydraulikflüssigkeit in Betracht, welche bei der Anwendung einer Bremse insbesondere eine handelsübliche Bremsflüssigkeit ist. Das Stellgerät umfasst eine elektromechanische Anordnung und eine Ventilbetätigungseinrichtung mit einem Schließelement. In der elektromechanischen Anordnung ist bevorzugt ein Schließelement vorgesehen, welches mit einem Anker mechanisch verbunden ist. Bei dem Schließelement handelt es sich bevorzugt um einen Stößel. Das Schließelement wird durch ein Rückstellelement zurückbewegt, wenn kein Strom durch die Erregerspule fließt. Bei dem Rückstellelement handelt es sich bevorzugt um eine Rückstellfeder, die auf das Rückstellelement wirkt.

Als abgeleitete Größe wird bevorzugt die magnetische Kraft bestimmt.

Die aus der elektromagnetischen Eigenschaft abgeleitete Größe ist bevorzugt die auf das Schließelement wirkende magnetische Kraft $F_{mag}$. Diese wird insbesondere im Verhältnis zur Kraft des Rückstellelements $F_{Feder}$ betrachtet.

Weiterhin bevorzugt handelt es sich bei der abgeleiteten Größe um den weiter unten definierte Öffnungsweg 1 und/oder die weiter unten definierte Federkraft $F_{Feder}$ des Stellgeräts.

Das Stellgerät besitzt vorzugsweise eine vollständig geöffnete und eine vollständig geschlossene Position. Je nach Art des Stellgeräts, stromlos offen (SO-V) oder stromlos geschlossen (SG-V), nimmt das Stellgerät eine dieser Positionen, hervorgerufen durch ein Rückstellelement ein. Ein geeignetes Rückstellelement kann bevorzugt eine Feder sein, welche eine definierte Kraft/Weg-Kennlinie aufweist, die sich insbesondere durch eine Geradengleichung annähern lässt.

Das Verfahren nach der Erfindung wird bevorzugt zur Herstellung von Ventilen für eine elektrohydraulische Vorrichtung zur Bremsenregelung für Kraftfahrzeuge eingesetzt, wie zum Beispiel ein ABS/ESP-Bremsensteuergerät.

Wie bereits erwähnt, hat es sich gezeigt, dass die Ursachen für die unerwünschten Streuungen der Stellgeräte-Kennlinien bzw. insbesondere deren Gradienten überwiegend von den Toleranzen der Mechanik, z.B. der schwankenden Federkraft $F_{Feder}$, und des magnetischen Feldlinienkreises (z.B. magnetische Widerstände der Luftspalte, etc.) des Stellgeräts herrühren.

Die gemessene elektromagnetische Eigenschaft ist bevorzugt eine oder mehrere Eigenschaften des Stellgeräts aus der Gruppe:

- Magnetischer Widerstand $R_M$ der elektromechanischen Anordnung,
- Induktivität L der elektromechanischen Anordnung,
- die auf die Ventilbetätigungseinrichtung einwirkende elektrisch gemessene magnetische Kraft $F_{magn}$,
- der zum Öffnen oder Schließen erforderliche Haltestrom $I_{halt}$ oder
- der zum Öffnen oder Schließen erforderliche Öffnungsstrom $I_{öff}$.

Nach dem Verfahren der Erfindung wird bevorzugt der Öffnungsstrom, der Haltestrom, der magnetische Widerstand oder die Induktivität durch den Regler eingestellt. Dies kann zum Beispiel bei bei vollständig geschlossenem Stellgerät oder auch in definiert angesteuerten Zuständen des Stellgeräts erfolgen. Dabei wird insbesondere im Falle eines Ventils der Luftspalt, zum Beispiel der Restluftspalt, in der magnetischen Anordnung zwischen Anker und Stößelführung durch Verschieben des Ventilsitzes so weit verringert, bis der magnetische Gesamtwiderstand einem gewünschten Wert entspricht.

Für die Durchführung der erfindungsgemäßen Regelung wird bevorzugt der Sollwert des Erregerstroms in der Erregerspule kontinuierlich nach einem vorgegebenen Muster, zum Beispiel einem Sägezahnmuster oder einer Rampe, verändert. Dann wird aus dem zeitlichen Istwert des Erregerstroms und/oder der induzierten Spannung der Zeitpunkt der Ventilhaltestrom bestimmt. Zum Ermitteln der Regelgröße wird die induzierte Spannung an der Erregerspule und/oder an einer Messspule im magnetischen Kreis gemessen. An Stelle des Ventilhaltestroms kann auch der Ventilöffnungsstrom, welcher den Öffnungspunkt des Ventils angibt, bestimmt werden. Wird zum Beispiel der Sollwert des Erregerstroms kontinuierlich in Form einer Rampe verringert, zeigt sich zum Zeitpunkt der Ventilöffnung, bei der sich der Anker bewegt, -unter der Voraussetzung, dass die verwendete Stromquelle nicht ideal ist- eine Unregelmäßigkeit im elektrischen Verhalten der Erregerspule, welche sich durch Beobachtung des Ansteuerstroms, der Spannung an der Erregerspule oder, besonders ausgeprägt, an der Induktionsspannung einer zusätzlich im Magnetkreis angebrachten Messspule erkennen lässt. Durch Bestimmung des Zeitpunkts dieser Unregelmäßigkeit kann der Ventilhaltestrom bestimmt werden.

An Stelle der rampenförmigen Absenkung des Erregerstroms (oder Erhöhung) kann in einer alternativ bevorzugten Ausführungsform auch die Erregerspannung rampenförmig oder nach einem vorgegebenen Muster verändert werden.

Zur Messung der elektromagnetischen Eigenschaft ist bevorzugt im magnetischen Kreis des Stellgerätes neben der Erregerspule mindestens ein zusätzliches induktives Bauelement angeordnet, dessen Induktionsspannung zur Berechnung der elektromagnetischen Größe herangezogen wird. Das zusätzliche induktive Bauelement ist dabei insbesondere eine Messspule.

Bei der elektromagnetischen Eigenschaft handelt es sich im Falle einer eingesetzten Messspule insbesondere um die integrierte Spannung an der Messspule.

Aus der auf diese oder andere Weise gemessenen induzierten Spannung und dem anschließend gebildeten Integralwert wird nach dem Verfahren bevorzugt der Magnetfluss und daraus die magnetische Kraft und/oder der Stößelhub bestimmt.

Nach einer bevorzugten Ausführungsform des Verfahrens wird der Haltestrom und/oder Öffnungsstrom des Stellgeräts aus den stellgerätespezifischen Kenngrößen ermittelt.

Ein Ziel der Erfindung ist es, während eines Produktionsprozesses eine möglichst geringe Streuung bzw. ein einheitliches Verhalten bei den elektrischen Kennlinien in Bezug die einzustellende Druckgröße zu erhalten. Vorzugsweise ist dies eine Kennlinie, die den Zusammenhang zwischen Öffnungsstrom und Differenzdruck festlegt. Daher wird nach einer weiteren bevorzugten Ausführungsform des Verfahrens das Stellgerät während der Herstellung oder Justage einem genau definiert vorgegebenen Differenzdruck und/oder einem genau definiert vorgegebenen Durchfluss ausgesetzt.

Wenn eine zusätzliche Genauigkeitserhöhung bei der Bremsenregelung, insbesondere zum Ausgleich von Langzeitverschleißeffekten gewünscht wird, kann es sinnvoll sein, zusätzlich, nach einer weiteren bevorzugten Ausführungsform der Erfindung, zunächst eine Justage des Stellgeräts außerhalb eines Objekts, welches zum Beispiel ein Kraftfahrzeug ist, durchgeführt wird und dann, nach Einbau des Stellgeräts in das Objekt, eine Justage innerhalb des Objekts, in dem das Ventil genutzt wird, durchgeführt wird, welche ebenfalls auf der Messung von elektromechanischen Eigenschaften beruht.

Gemäß dieser bevorzugten Ausführungsform des Verfahrens wird also nach der Herstellung und/oder Justage gemäß Anspruch 1 eine weitere Kalibrierung ohne die Verwendung von Druckbeaufschlagungen des Stellgeräts durchgeführt, welche insbesondere dadurch gekennzeichnet ist, dass diese Kalibrierung durch die elektronische Steuerung des Bremssystems selbstständig durchgeführt wird. Wie gesagt, kann hierdurch die Genauigkeit bei einer Analogregelung des Stellgeräts mittels des erfindungsgemäß hergestellten Stellgeräts noch weiter verbessert werden. Gemäß diesem Verfahren, bei dem stellgerätespezifische Kenngrößen ohne die Verwendung von Druckbeaufschlagungen (Differenzdruck $\Delta P = 0$) des Stellgeräts automatisch ermittelt werden, wird ganz besonders bevorzugt eine Regelung der Stößelkraft oder des magnetischen Widerstands durchgeführt, in dem als Regelgröße die integrierte elektrische Induktionsspannung an der Spule des Stellgerätes betrachtet wird.

Es kann zum Verständnis der Erfindung sinnvoll sein, die Eigenschaften eines Stellgeräts zur Vereinfachung der technischen Zusammenhänge in individuelle magnetische und mechanische Eigenschaften, die zum Beispiel durch Kenngrößen $KG_{ind}$ beschrieben werden können, und allgemeine magnetische und mechanische Eigenschaften, die sich z.B. durch Kenngrößen $KG_{all}$ beschreiben lassen, einzuteilen. Die Kenngrößen $KG_{ind}$ fassen Größen zusammen, welche toleranzbedingt von Ventil zu Ventil besonders stark streuen. Die Kenngrößen $KG_{all}$ bezeichnen weniger streuende Kenngrößen und können deshalb für die Bauart oder Baureihe einmal festgelegt werden. Die allgemeinen Kenngrößen $KG_{all}$ können zweckmäßigerweise in einem elektronischen Steuergerät innerhalb des Objekts dauerhaft gespeichert werden. Aus den Kenngrößen $KG_{all}$ und $KG_{ind}$ können dann die Stellgerätekennlinie und damit der erforderliche differenzdruckabhängige Ansteuerstrom für das jeweilige Stellgerät ohne weiteres berechnet werden. Selbstverständlich können an Stelle der Kenngrößen auch Kennfelder, Eichkurven oder dergleichen gespeichert werden.

Nach einer bevorzugten Ausführungsform des Verfahrens wird der magnetische Gesamtwiderstand $R_m$ des magnetischen Kreises in der elektromagnetischen Anordnung gemessen. Generell gilt, dass an Stelle des magnetischen Widerstands auch die Induktivität L des entsprechenden Magnetkreises, bezogen auf die Windungszahl N der Spule, als äquivalente physikalische Größe in entsprechender Weise zur Durchführung des erfindungsgemäßen Verfahrens herangezogen werden kann.

Im magnetischen Kreis ist bevorzugt mindestens ein zusätzliches Messelement, insbesondere mindestens eine Messspule vorgesehen, mit der sich die Induktivität, der magnetische Fluss bzw. der magnetische Widerstand messen lässt. Als Messelement können außer einer Spule prinzipiell auch weitere, an sich bekannte, magnetfeldabhängige Sensoren, wie Hallsensoren, MR-Sensoren etc, verwendet werden, wenn sie zur Erfassung des wirksamen magnetischen Flusses geeignet sind. Der Einsatz einer Spule erscheint jedoch auf Grund der Möglichkeit einer kostengünstigen Fertigung besonders zweckmäßig.

Die zuvor beschriebene Messspule kann elektrisch unabhängig von der Ansteuerspule sein. Es ist aber nach einer bevorzugten Ausführungsform möglich, die Messspule elektrisch in Reihe mit der Ansteuerspule zu schalten. Hierdurch ergibt sich der Vorteil, dass lediglich drei Ansteuerleitungen benötigt werden.

Der Durchfluss G des Stellgerätes bzw. Ventils wird im Prinzip neben dem Differenzdruck und den geometrischen Strömungseigenschaften durch die Kraft bestimmt, welche auf den Stößel des betreffenden Stellgeräts (Stößelkraft) wirkt. Auf den Stößel des Ventils wirkt gleichzeitig die magnetische Kraft $F_{magn}$, die durch das Fluid hervorgerufene (z.B. pneumatische oder hydraulische) druckabhängige Kraft $F_{hyd}$ und die durch das Rückstellelement ausgeübte Kraft $F_{Feder}$. Im Kräftegleichgewicht (Stößel steht still) heben sich diese gemeinsam wirkenden Kräfte gegenseitig auf. In diesem Zustand fließt im Falle einer über eine Erregerspule erzeugten magnetischen Kraft gerade der sogenannte Haltestrom $I_{halt}$.

Gemäß dem Verfahren der Erfindung wird bevorzugt in einer Berechnungsroutine die Federkraft, und wenn erforderlich der maximale Stößelhub, ermittelt. Diese Größen gehen dann zum Beispiel mit in die Kraftberechnung ein.

Eine Besonderheit des Verfahrens nach der Erfindung besteht unter anderem darin, dass bevorzugt eine Messung des Magnetflusses durchgeführt und insbesondere nach diesem auch geregelt wird. Dies ist deshalb sinnvoll, weil die magnetische Kraft direkt abhängig vom magnetischen Fluss ist.

Die Erfindung betrifft auch eine Justagevorrichtung zur Herstellung und/oder mechanischen Justage eines elektromagnetisch ansteuerbaren Stellgeräts, mit der bevorzugt das obige Verfahren durchgeführt wird. Die Vorrichtung umfasst dabei selbst eine elektromagnetische Erregerspule, in die das Stellgerät (umfasst in diesem Fall in der Regel selbst keine Erregerspule) in eine entsprechende Aufnahme eingeschoben werden kann. Die Justagevorrichtung ist durch einen Regelkreis gekennzeichnet, welcher als Istwert eine elektromagnetische Eigenschaft des in die Justagevorrichtung einsetzbaren Stellgerätes verwendet. Die Stellgröße der Regelung wirkt über die Justagevorrichtung auf eine mechanische Eigenschaft des Stellgeräts ein, so dass diese mechanische Eigenschaft, welche zum Beispiel der Stößelhub ist, mit der Vorrichtung eingestellt werden kann.

Die Justagevorrichtung umfasst bevorzugt ein zusätzliches induktives Bauelement, welches ein elektrisches Signal zur Bildung des Istwerts des Regelkreises liefert, wobei es sich bei dem induktiven Bauelement insbesondere um eine Messspule handelt.

Die Stellgröße der Regelung verändert bevorzugt den Abstand der Pressguthalterung einer Pressenanordnung, welche das Stellgerät zum Zwecke eines Einpressvorgangs aufnehmen kann. Hierzu wird insbesondere der Abstand der Pressenhalterarme durch den Regler gesteuert. Die Steuerung des Abstands erfolgt insbesondere durch Vorgabe eines Geschwindigkeitssignals (Schließgeschwindigkeit des Halters) oder eines Abstandssignals. Es ist aber auch möglich, dass der Regler den Pressdruck einstellt.

Bei dem oben beschriebenen Justageverfahren wird bevorzugt der Ventilsitz eines Ventils mittels eines Einpressvorgangs justiert. Der dabei durch die Justiervorrichtung hervorgerufene Einschubmaß liegt vorzugsweise in einem Bereich von etwa 0,2 $\mu$m bis etwa 500 $\mu$m.

Weitere bevorzugte Ausführungsformen ergeben sich aus den Unteransprüchen und der nachfolgenden Beschreibung von Ausführungsbeispielen an Hand von Figuren.

Es zeigen

Fig. 1 eine schematische Darstellung des Ventilkalibrierungsprozesses,

Fig. 2 den Aufbau eines erfindungsgemäß einsetzbaren Ventils,

Fig. 3 eine schematische Darstellung einer Justagevorrichtung zum Einstellen eines Ventils und

Fig. 4 eine schematische Darstellung zur Erläuterung des Justageregelkreises.

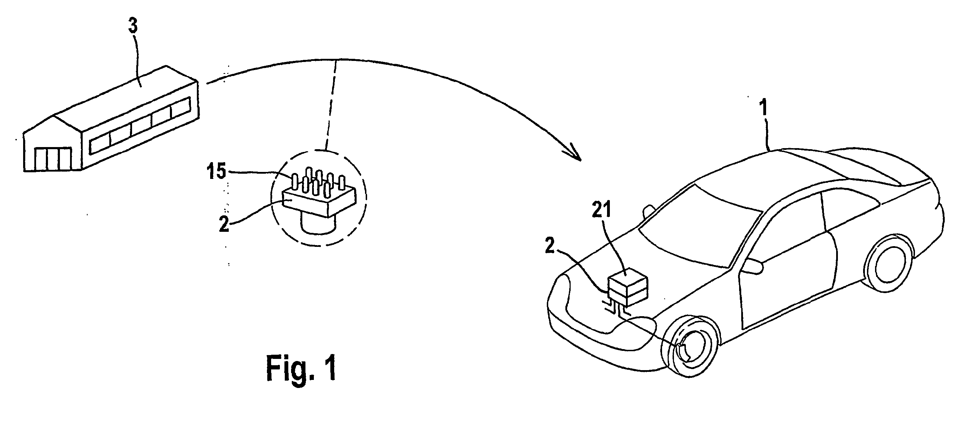

Fig. 1 erläutert den Fertigungsprozess eines Magnetventils 15 für ein elektrohydraulisches Bremssystems 2 in einem Kraftfahrzeuge 1 mit ABS-/ESP-Funktion. Zunächst werden die Magnetventile in Produktionsstätte 3 nach deren Herstellung mechanisch gemäß dem erfindungsgemäßen Verfahren hinsichtlich eines einheitlichen Öffnungsstromverhaltens justiert und in Bremsensteuergerät 2 eingesetzt. Auf Grund vorhandener oder im Laufe der Zeit eintretender Resttoleranzen kann, wenn eine besonders hohe Genauigkeit bei der Bremsenregelung gewünscht wird, zusätzlich nach dem Einbau des Bremsensteuergeräts 2 in Kraftfahrzeug 1 noch der weiter unten beschriebene Kalibrierprozess im Kraftfahrzeug durch den elektronischen Regler 21 durchgeführt werden.

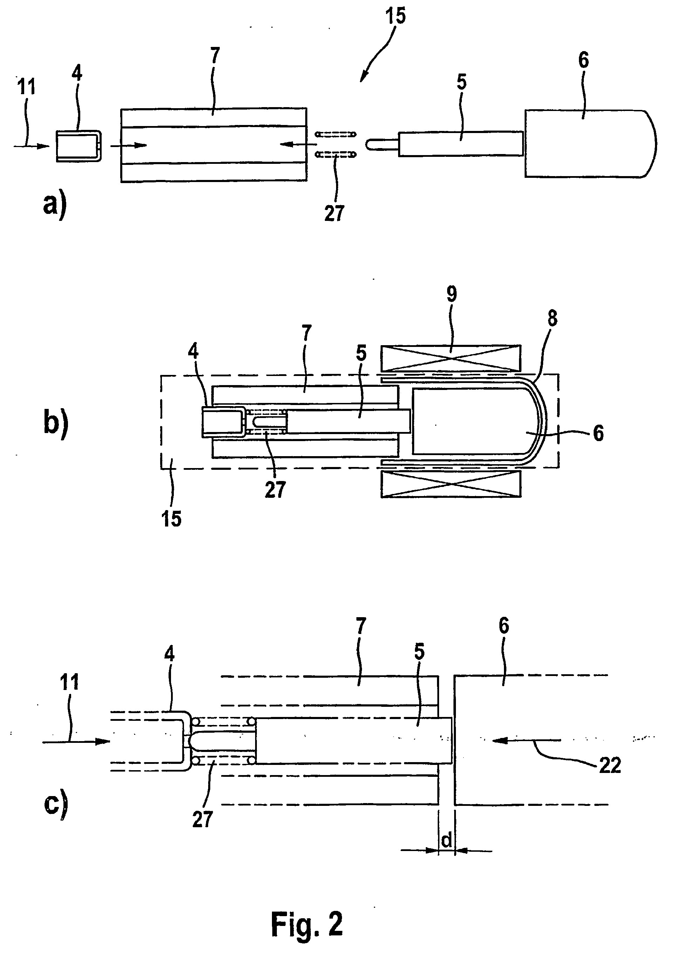

Fig. 2 zeigt stark schematisiert den Aufbau eines typischen Magnetventils 15. Anker 6, Gehäuse 7, Hülse 8 und Spule 9 sind Bestandteile der elektromagnetischen Anordnung, die mechanisch auf das eigentliche Ventil einwirkt. Genauer gesagt wird Anker 6 durch das Magnetfeld von Ventilspule 9 bewegt, wodurch dieser auf Stößel 5 mechanisch einwirkt. Im Beispiel eines stromlos offenen Ventils (SO-Ventil) drückt Rückstellfeder 27 Stößel 5 in die geöffnete Stellung, wenn kein Magnetfeld vorhanden ist. Teilbild c) zeigt das Ventil in der geschlossenen Stellung mit bestromter Ventilspule. Stößel 5 schließt dabei die Öffnung in Ventilsitz 4 ab. Anker 6 des dargestellten Ventils nähert sich beim Schließen des Ventils Gehäuse 7 an, berührt dieses jedoch nicht ganz. Der verbleibende Zwischenraum zwischen Anker und Gehäuse wird als Restluftspalt d bezeichnet. Nach dem hier beschriebenen Verfahren wird Restluftspalt-d durch eine Verschiebung in Pfeilrichtung 11 von Ventilsitz 4 eingestellt. Dies erfolgt durch Betrachtung des magnetischen Widerstandes in der geschlossenen Ventilstellung oder durch Betrachtung des Öffnungsstroms, welcher sich aus einer weiter unten beschriebenen definierten Ansteuerung der Erregerspule 9 ermitteln lässt.

Eine zweite Justage wird in der Geöffnetstellung des Ventils vorgenommen. Bei vollständig geöffnetem Ventil schlägt Anker 6 an Hülse 8 an. Der Weg zwischen vollständiger Schließstellung und vollständiger Öffnungsstellung wird als Stößelhub bezeichnet und kann durch vergleichende Betrachtung des magnetischen Widerstands in der Geöffnetstellung und in der Schließstellung bestimmt werden. Der Stößelhub lässt sich durch Verschiebung von Hülse 8 einstellen.

Kalibrierprozess im Kraftfahrzeug

Der weiter oben erwähnte Kalibrierprozess in Kraftfahrzeug 1 läuft automatisch in der elektronischen Steuereinheit 21 des Bremsensteuergeräts ab und dient zur Berechnung der für die Ventildurchflussregelung notwendigen ventilindividuellen Öffnungsstromkennlinien. Eine Besonderheit dieses Kalibriervorgangs ist, dass der eigentliche Kalibriervorgang ohne Druckbeaufschlagung der Ventile durchgeführt wird. Deshalb ist der Kalibriervorgang jederzeit autark und unabhängig von einem Werkstattaufenthalt durchführbar. In diesem Beispiel wird die Federkraft individuell bestimmt. Zunächst wird der Spulenstrom I des stromlos offenen Magnetventils 15 schrittweise erhöht (jeweils mit Ein- und Ausschalten des Ventilstromes). Ab einem bestimmten Strom schließt das Ventil, Anker 6 bewegt sich in Pfeilrichtung 22 (Fig. 2c). Das Bewegen des Ankers bewirkt ein Verkleinern des Luftspaltes zwischen Anker 6 und Gehäuse 7 und damit eine messbare Änderung des magnetischen Gesamtwiderstandes $R_m$ und somit auch der Induktivität L.

Dabei gilt:

$$L = \frac{N^2}{R_m} \quad , \qquad \Phi = \frac{N \times I}{R_m}$$

(N = Windungszahl der Spule, $\Phi$ = magnetischer Fluss).

Zum Zeitpunkt des Beginns der Bewegung von Anker 6 besteht bei Differenzdruck $\Delta P = 0$ ein Gleichgewichtszustand zwischen der magnetischen Kraft $F_{magn}$ und der auf den Anker wirkenden Federkraft $F_{Feder}$:

$$F_{Feder} = F_{magn} = \frac{1}{2 * \mu_0 * A_{Anker}} * \Phi^2 \quad ,$$

($\mu_0$ = Permeabilitätskonstante der Luft, $A_{Anker}$ = Ankerfläche). Somit lässt sich Federkraft $F_{Feder}$ aus magnetischem Fluss $\Phi$ unter Berücksichtigung der Ankerfläche $A_{Anker}$ berechnen. Die auf diese Weise gemessenen toleranzbedingten Abweichungen der Federkräfte können dann in einem Speicher von Regler 21 abgelegt werden.

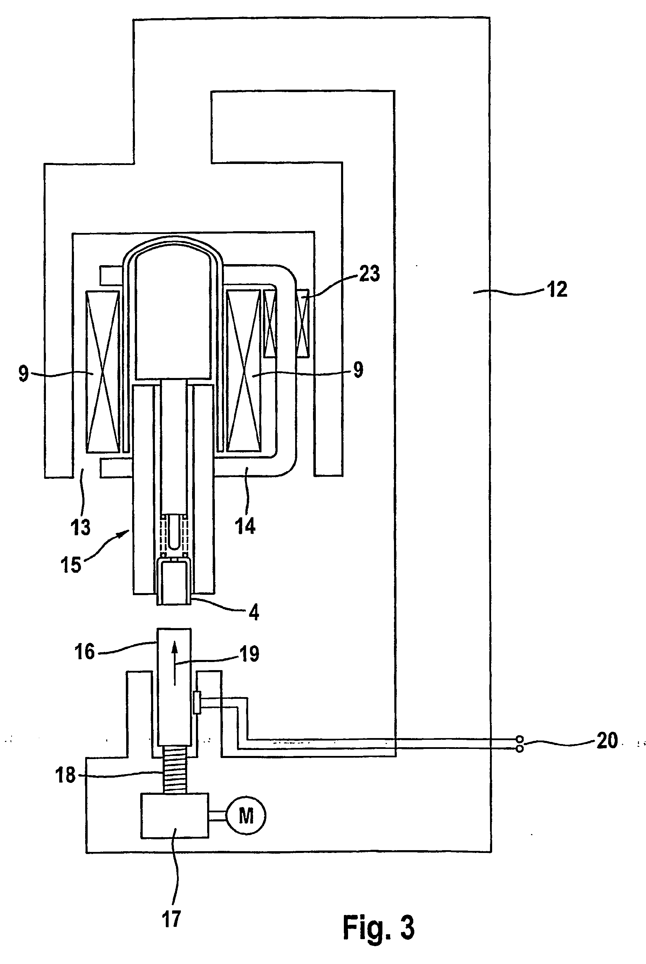

Die schematische Darstellung in Fig. 3 zeigt eine Presse 12, mit der Ventilsitz 4 des Ventils 15 eingestellt wird. Presse 12 umfasst im oberen Teil eine Pressenaufnahme 13, in welche Ventil 15 eingesetzt werden kann. In Ventilaufnahme 13 ist Erregerspule 9 zum Betätigen von Ventil 15 integriert. Weiterhin umfasst Ventilaufnahme 13 einen Eisenrückschluss 14, auf den zusätzliche Windungen einer Messspule 23 gewickelt sind. Mittels Messspule 23 kann besonders einfach der Fluss im magetischen Kreis bestimmt werden.

Im unteren Teil der Presse ist Pressenstößel 16 axial, in Richtung des Pfeils 19 verschiebbar, geführt. Die Position von Pressenstößel 16 lässt sich durch Antrieb 17 über Spindel 18 einstellen. Die Absolutposition von Stößel 16 kann über den elektrischen Eingang 20 durch ein elektrisches Signal vorgegeben werden. Zum Eindrücken von Ventilsitz 4 in Gehäuse 7 wird der Pressenstößel kontinuierlich mit der Geschwindigkeit $v = \frac{\Delta X}{\Delta t}$ in Richtung des Pfeils 19 bewegt. Erregerspule 9 wird mit einem Strom nach einem vorgegebenen Muster (z.B. Sägezahnmuster etc.) angesteuert, wobei der Strom einen Wert hat, welcher, je nach dem ob das Ventil zunächst geöffnet oder zunächst geschlossen ist, in der Weise geändert wird, dass das Ventil schaltet. Das Muster ist bevorzugt so gestaltet, dass das Ventil in regelmäßigen Abständen wiederholt schaltet (taktweise Ansteuerung).

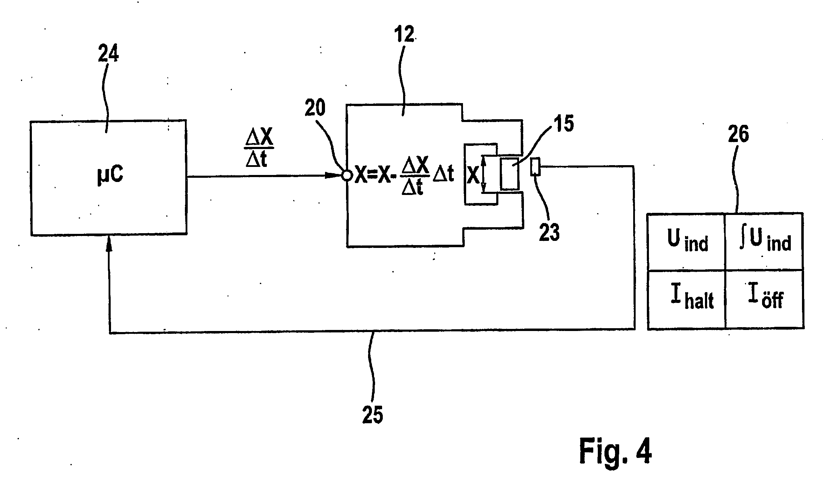

Der geschlossene Regelkreis zur Justage de elektromagnetischen Eigenschaft ist in Fig. 4 schematisch dargestellt. Pressensteuerelektronik 24 bildet eine dem Eingang 20 zugeführte Stellgröße $\frac{\Delta X}{\Delta t}$, welche die Einpressgeschwindigkeit für Presse 12 vorgibt. Nach Maßgabe dieses Signals wird Ventil 15 zusammengedrückt. Durch Rückführung einer elektromagnetischen Größe 26 des Ventils über Leitung 25 entsteht eine Regelschleife unter Einbindung der Presse, mit der die gewünschte elektromagnetische Größe des Ventils besonders genau durch Pressenelektronik 24 eingeregelt werden kann. Die rückgeführte elektromagnetische Größe 26 kann, wie im Kasten der Fig. 4 dargestellt, entweder die an Erregerspule 9 oder an separater Messspule 23 gemessene induzierte Spannung $U_{ind}$ sein, aber auch ein elektronisch ermittelter Integralwert $\int U_{ind}$ dieser Größe. Der Integralwert $\int U_{ind}$ ist proportional zum magnetischen Fluss, so dass hier eine Flussregelung realisiert ist. Im Falle der Übermittlung der induzierten Spannung über Leitung 25 muss das Integral in Elektronik 24 vor dem eigentlichen Regelvorgang gebildet werden. Alternativ kann auch der aktuelle Ventilhaltestrom $I_{halt}$ oder der Ventilöffnungsstrom $I_{öff}$ über Leitung 25 an Elektronik 24 als Regelgröße übermittelt werden.

Nachfolgend wird ein Beispiel zur Bestimmung des Ventilstößelhubs 1 beschrieben. Bei der folgenden Berechnung des Stößelhubs werden die anschließend dargestellten physikalischen Zusammenhänge zu Grunde gelegt:

$$U_{ind} = -N * \frac{d\Phi}{dt} \qquad \text{und} \qquad \Phi = -\frac{1}{N}\int_0^t U_{ind}\,dt \;.$$

Beim Abschalten des Ventilstroms I ergibt sich eine Änderung des magnetischen Flusses $\Phi$ in Ventil 15, welche zu einer Induktionsspannung $U_{ind}$ an Erregerspule 9 oder Messspule 23 führt. Der magnetische Gesamtwiderstand $R_M$ kann im offenen und geschlossenen Zustand des Ventils gemessen werden. Dieser setzt sich zusammen aus dem von der Stellung des Ankers abhängigen magnetischen Widerstand des Luftspalts am Anker $R_M^{\text{Luft}} = \dfrac{l}{\mu_0 * A_{An\,ker}}$, wobei $A_{Anker}$ die für die Ventilbaureihe spezifische magnetisch wirksame Fläche des Ankers 6 und 1 der Stößelhub ist. Das eigentliche Messverfahren ermittelt den Wert für $RM_{Luft}$ nicht direkt, sondern über eine Messung des magnetischen Widerstands bei vollständig geöffnetem Ventil und Subtraktion des magnetischen Widerstands des geschlossenen Ventils. Auf diese Weise lässt demzufolge der Stößelhub 1 alleine aus einer Messung der elektromagnetischen Eigenschaften bestimmen.

Im zuvor beschriebenen Beispiel ist das Ventil während der Messung des magnetischen Widerstands immer vollständig geschlossen oder vollständig geöffnet. Nachfolgend wird ein Beispiel für ein Justageverfahren mit getakteter Ventilöffnung beschrieben. Zunächst wird zur Einstellung des Luftspalts d bei geschlossenem Ventil Ventilsitz 4 in Gehäuse 7 hineingeschoben, so dass sich der magnetische Widerstand des geschlossenen Ventils kontinuierlich vergrößert. Der Strom in der Erregerspule ist zunächst höher, als der Schließstrom des Ventils. Dann wird während des Zusammendrückens der Presse mit einer gleichbleibenden Geschwindigkeit zu wiederholten Zeitpunkten, also taktweise, das Ventil über den Strom in Erregerspule 9 geöffnet und dabei der Ventilöffnungsstrom bestimmt. Eine Bestimmung des Ventilöffnungsstroms ist durch Betrachtung des zeitlichen Verlaufs der Induktionsspannung und/oder der Erregerspulenspannung und/oder des Spulenstroms möglich, da sich bei der dabei auftretenden Bewegung des Ventilankers 6 ein messbarer Peak im Spannungs- und Stromverlauf der im Magnetflusskreis angeordneten Spulen ergibt. Aus dem Bereich des zum Zeitpunkt des Peaks fließenden Stroms kann der Ventilöffnungsstrom des Ventils bei einer bestimmten aktuellen Luftspalteinstellung ermittelt werden. Der ermittelte Öffnungsstrom wird punktweise an Steuereinrichtung 24 übermittelt. Die punktweise bzw. taktweise Ermittlung erfolgt mit einer Messfrequenz, welche so hoch ist, dass ein quasikontinuierliches Regelsignal für die Presseneinstellung zur Verfügung steht.

Die obigen Ausführungen beziehen sich auf ein Ventil, welches stromlos offen ist (SO-Ventil). In analoger Weise lässt sich das beschriebene Verfahren auch für Ventile einsetzen, welche stromlos geschlossen sind (SG-Ventile).

## Patentansprüche

1. Verfahren zur Herstellung und/oder Justage eines elektromagnetisch ansteuerbaren Stellgeräts, welches zum Regeln des Durchflusses eines Fluids geeignet ist, insbesondere eines hydraulischen oder pneumatischen Analogventils oder eines analogisierten Schaltventils (10), wobei das Stellgerät eine elektromagnetische Anordnung umfasst, die mittels einer Erregerspule (9) ansteuerbar ist, und diese zumindest einen beweglichem Anker (6) aufweist, und wobei die elektromagnetische Anordnung mechanisch auf eine Ventilbetätigungseinrichtung zum Öffnen und Schließen des Stellgeräts einwirkt, wobei die Ventilbetätigungseinrichtung zumindest ein Schließelement (5), ein Rückstellelement (27) zum Öffnen oder Schließen des Schließelements bei nicht erregter Erregerspule und einen Ventilsitz (4) umfasst, in den das Schließelement zum Öffnen oder Schließen des Stellgeräts eingreift, **dadurch gekennzeichnet, dass** eine Einstellgröße, welche zumindest eine mechanische Eigenschaft des Stellgerätes beschreibt, direkt bei der Herstellung oder Justage des Stellgeräts eingestellt wird, wobei zumindest eine elektromagnetische Eigenschaft des Stellgeräts gemessen wird und die gemessene elektromagnetische Eigenschaft selbst oder eine daraus abgeleitete Größe als Istwert für eine Regelung der Einstellgröße verwendet wird.

2. Verfahren nach Anspruch 1, **dadurch gekennzeichnet, dass** die elektromagnetische Eigenschaft eine oder mehrere Eigenschaften aus der Gruppe

    - magnetischer Widerstand $R_M$ der elektromechanischen Anordnung,

- Induktivität L der elektromechanischen Anordnung,
- die auf die Ventilbetätigungseinrichtung einwirkende elektrisch gemessene magnetische Kraft $F_{magn}$,
- der zum Öffnen oder Schließen erforderliche Haltestrom $I_{halt}$ oder
- der zum Öffnen oder Schließen erforderliche Öffnungsstrom $I_{öff}$

des Stellgeräts ist.

3. Verfahren nach Anspruch 1 oder 2, **dadurch gekennzeichnet, dass** die Erregerspule Teil einer Montage oder Justagevorrichtung ist, in die das Stellgerät zur Durchführung des Verfahrens nach Anspruch 1 eingesetzt wird.

4. Verfahren nach mindestens einem der vorhergehenden Ansprüche, **dadurch gekennzeichnet, dass** die elektromagnetische Eigenschaft, welche insbesondere der Öffnungsstrom, der Haltestrom, der magnetische Widerstand oder die Induktivität ist, bei vollständig geschlossenem Stellgerät durch den Regler eingestellt wird.

5. Verfahren nach mindestens einem der vorhergehenden Ansprüche, **dadurch gekennzeichnet, dass** die magnetische Eigenschaft, insbesondere der magnetische Widerstand, bei vollständig geöffnetem Stellgerät durch mechanische Justage des Stößelhubs und/oder eines Luftspalts in der magnetischen Anordnung eingestellt wird.

6. Verfahren nach mindestens einem der vorhergehenden Ansprüche, **dadurch gekennzeichnet, dass** die an der Erregerspule und/oder an einer Messspule in der magnetischen Anordnung als Folge einer Stromänderung induzierte Spannung gemessen und insbesondere integriert wird.

7. Verfahren nach mindestens einem der vorhergehenden Ansprüche, **dadurch gekennzeichnet, dass** der Sollwert des Erregerstroms in der Erregerspule kontinuierlich nach einem vorgegebenen Muster verändert wird und aus dem zeitlichen Istwert des Erregerstroms und/oder der induzierten Spannung der Ventilöffnungs- und/oder der Ventilhaltestrom bestimmt wird, wobei die induzierte Spannung an der Erregerspule und/oder an einer Messspule im magnetischen Kreis gemessen wird.

8. Verfahren nach Anspruch 7, **dadurch gekennzeichnet, dass** das Strommuster einem sägezahnförmigen Verlauf entspricht.

9. Verfahren nach mindestens einem der vorhergehenden Ansprüche, **dadurch gekennzeichnet, dass** die Justage eine mechanische Justage ist und diese während des Fertigungsprozesses des Ventils durchgeführt wird.

10. Verfahren nach mindestens einem der vorhergehenden Ansprüche, **dadurch gekennzeichnet, dass** zunächst die Justage außerhalb eines Objekts (1, 2) durchgeführt wird und nach Einbau des Stellgeräts in das Objekt eine Justage innerhalb des Objekts, in dem das Stellgerät genutzt wird, durchgeführt wird, welche ebenfalls auf der Messung von elektromechanischen Eigenschaften beruht.

11. Verfahren nach mindestens einem der vorhergehenden Ansprüche, **dadurch gekennzeichnet, dass** die Justage außerhalb des Objekts zum Ausgleichen des Einflusses von Toleranzen auf die Öffnungsstromcharakteristik, welche insbesondere auf einem unterschiedlichen Kraft-/Weg-Verlauf der Rückstellelemente beruhen, eingesetzt wird.

12. Justagevorrichtung zur Herstellung und/oder mechanischen Justage eines elektromagnetisch ansteuerbaren Stellgeräts, insbesondere eines Pneumatik oder Hydraulikventils, umfassend eine elektromagnetische Erregerspule (6), welche Bestandteil der Justagevorrichtung ist und eine Aufnahme, welche das Einsetzen eines durch die Erregerspule elektromagnetisch ansteuerbaren Stellgeräts erlaubt, welches zumindest einen Anker (7), einen bewegten Stößel (8) und eine Ventilbetätigungseinrichtung (4,5,6) umfasst, wobei der Anker durch den Erregerspulenstrom zum Öffnen und/oder Schließen des Stellgeräts bewegt werden kann, **dadurch gekennzeichnet, dass** die Justagevorrichtung einen Regelkreis umfasst, bei dem der Istwert eine elektromagnetische Eigenschaft des in die Justagevorrichtung einsetzbaren Stellgerätes ist und durch die Stellgröße zumindest eine mechanische Eigenschaft des Stellgeräts eingestellt wird.

13. Justagevorrichtung nach Anspruch 12, **dadurch gekennzeichnet, dass** die Stellgröße den Abstand ($X$, $\Delta X$) der Pressgutaufnahmehalterung einer Pressenanordnung bestimmt.

14. Justagevorrichtung nach Anspruch 12 oder 13, **dadurch gekennzeichnet, dass** mit dieser das Verfahren gemäß mindestens einem der Ansprüche 1 bis 11 durchgeführt wird.

**Claims**

1. Method for producing and/or adjusting an electromagnetically controllable actuator, which is appropriate to control the flow of a fluid, in particular a hydraulic or pneumatic analog valve or an analogized on-off valve (10), with the actuator comprising an electromagnetic arrangement that can be driven by means of an exciter coil (9) including at least one movable armature (6), and with the electromagnetic arrangement acting mechanically on a valve actuating device for opening and closing the actuator, with the valve actuating device comprising at least a closing element (5), a resetting element (27) for opening or closing the closing element when the exciter coil is not excited, and a valve seat (4) into which the closing element for opening or closing the actuator engages,
   **characterized in that** a correcting variable, describing at least one mechanical property of the actuator, is adjusted directly during the manufacture or adjustment of the actuator, with at least one electromagnetic property of the actuator being measured and the measured electromagnetic property itself or a quantity derived therefrom is used as an actual value for control of the correcting variable.

2. Method as claimed in claim 1,
   **characterized in that** the electromagnetic property is one or more of the properties out of the group

   - magnetic resistance $R_M$ of the electromechanical arrangement,
   - inductance L of the electromechanical arrangement,
   - the electrically measured magnetic force $F_{magn}$ acting on the valve actuating device,
   - the holding current $I_{hold}$ necessary for opening or closing, or
   - the opening current $I_{open}$ of the actuator necessary for opening or closing.

3. Method as claimed in claim 1 or 2,
   **characterized in that** the exciter coil is part of an assembly or adjustment device into which the actuator is mounted for implementing the method as claimed in claim 1.

4. Method as claimed in at least any one of the preceding claims,
   **characterized in that** the electromagnetic property, which is particularly the opening current, the holding current, the magnetic resistance, or the inductance, is adjusted by the controller when the actuator is completely closed.

5. Method as claimed in at least any one of the preceding claims,
   **characterized in that** the magnetic property, in particular the magnetic resistance, is adjusted by mechanical adjustment of the tappet stroke and/or an air slot in the magnetic arrangement when the actuator is completely opened.

6. Method as claimed in at least any one of the preceding claims,
   **characterized in that** the voltage induced at the exciter coil and/or at a measuring coil in the magnetic arrangement as a result of a current variation is measured and more particularly integrated.

7. Method as claimed in at least any one of the preceding claims,
   **characterized in that** the nominal value of the exciting current in the exciter coil is changed continuously according to a predetermined pattern and is determined from the temporal actual value of the exciting current and/or the induced voltage of the valve opening current and/or the valve holding current, and the induced voltage is measured at the exciter coil and/or at a measuring coil in the magnetic circuit.

8. Method as claimed in claim 7,
   **characterized in that** the current pattern corresponds to a saw-tooth-shaped course.

9. Method as claimed in at least any one of the preceding claims,
   **characterized in that** the adjustment is a mechanical adjustment being performed during the manufacturing process of the valve.

10. Method as claimed in at least any one of the preceding claims,
    **characterized in that** initially the adjustment is performed outside an object (1, 2) and, after the installation of the actuator into the object, an adjustment is performed inside the object in which the actuator is used, said adjustment being likewise based on the measurement of electromechanical properties.

11. Method as claimed in at least any one of the preceding claims,

**characterized in that** the adjustment outside the object is used to compensate the influence of tolerances on the opening current characteristics, which are especially due to a different force/travel variation of the resetting elements.

12. Adjustment device for producing and/or mechanically adjusting an electromagnetically controllable actuator, in particular a pneumatic or hydraulic valve, comprising an electromagnetic exciter coil (6), which is a component part of the adjustment device, and an accommodation which allows inserting an actuator that is electromagnetically drivable by the exciter coil, said actuator comprising at least an armature (7), a movable tappet (8), and a valve actuating device (4, 5, 6), and the armature can be moved by the exciter coil current to open and/or close the actuator, **characterized in that** the adjustment device comprises a control circuit wherein the actual value is an electromagnetic property of the actuator that can be mounted into the adjustment device, and at least one mechanical property of the actuator is adjusted by way of the correcting variable.

13. Adjustment device as claimed in claim 12,
**characterized in that** the correcting variable determines the distance (X, ΔX) of the holding device of a press arrangement in which the pressed material is accommodated.

14. Adjustment device as claimed in claim 12 or 13,
**characterized in that** it is used to implement the method according to at least any one of claims 1 to 11.

## Revendications

1. Procédé de fabrication et/ou d'ajustage d'un appareil de réglage à commande électromagnétique qui convient à la régulation du débit d'un fluide, en particulier d'une soupape analogique hydraulique ou pneumatique ou d'une soupape de commutation rendue analogique (10), l'appareil de réglage comprenant un agencement électromagnétique qui peut être commandé au moyen d'une bobine d'excitation (9), et celle-ci comportant au moins un induit mobile (6), et l'agencement électromagnétique agissant de manière mécanique sur un dispositif d'actionnement de soupape pour l'ouverture et la fermeture de l'appareil de réglage, le dispositif d'actionnement de soupape comprenant au moins un élément de fermeture (5), un élément de rappel (27) pour l'ouverture ou la fermeture de l'élément de fermeture lorsque la bobine d'excitation n'est pas excitée, ainsi qu'un siège de soupape (4) dans lequel s'engage l'élément de fermeture pour l'ouverture ou la fermeture de l'appareil de réglage, **caractérisé en ce qu'**une grandeur de réglage, qui décrit au moins une propriété mécanique de l'appareil de réglage, est réglée directement lors de la fabrication ou de l'ajustage de l'appareil de réglage, au moins une propriété électromagnétique de l'appareil de réglage étant mesurée et la propriété électromagnétique mesurée elle-même ou une grandeur dérivée de celle-ci étant utilisée comme valeur réelle pour une régulation de la grandeur de réglage.

2. Procédé selon la revendication 1, **caractérisé en ce que** la propriété électromagnétique est une ou plusieurs propriétés appartenant au groupe

- résistance magnétique $R_M$ de l'agencement électromécanique,
- inductance L de l'agencement électromécanique
- la force magnétique $F_{magn}$ mesurée électriquement agissant sur le dispositif d'actionnement de soupape,
- le courant de maintien $I_{halt}$ nécessaire à l'ouverture ou à la fermeture, ou
- le courant d'ouverture $I_{öff}$ nécessaire à l'ouverture ou à la fermeture de l'appareil de réglage.

3. Procédé selon la revendication 1 ou 2, **caractérisé en ce que** la bobine d'excitation fait partie d'un montage ou d'un dispositif d'ajustage dans lequel est inséré l'appareil de réglage pour la mise en oeuvre du procédé selon la revendication 1.

4. Procédé selon l'une au moins des revendications précédentes, **caractérisé en ce que** la propriété électromagnétique, qui est en particulier le courant d'ouverture, le courant de maintien, la résistance magnétique ou l'inductance, est réglée par le régulateur lorsque l'appareil de réglage est totalement fermé.

5. Procédé selon l'une au moins des revendications précédentes, **caractérisé en ce que** la propriété magnétique, en particulier la résistance magnétique, est réglée lorsque l'appareil de réglage est totalement ouvert, par ajustage mécanique de la course du poussoir et/ou d'un entrefer dans l'agencement magnétique.

6. Procédé selon l'une au moins des revendications précédentes, **caractérisé en ce que** la tension induite sur la bobine d'excitation et/ou sur une bobine de mesure dans l'agencement magnétique, à la suite d'une variation de courant, est mesurée et en particulier intégrée.

7. Procédé selon l'une au moins des revendications précédentes, **caractérisé en ce que** la valeur de consigne du courant d'excitation dans la bobine d'excitation est variée en continu selon un modèle prédéfini et, à partir de la valeur réelle temporaire du courant d'excitation et/ou de la tension induite, le courant d'ouverture de soupape et/ou le courant de maintien de soupape est déterminé, la tension induite étant mesurée sur la bobine d'excitation et/ou sur une bobine de mesure dans le circuit magnétique.

8. Procédé selon la revendication 7, **caractérisé en ce que** le modèle de courant correspond à une allure en dents de scie.

9. Procédé selon l'une au moins des revendications précédentes, **caractérisé en ce que** l'ajustage est un ajustage mécanique et celui-ci est exécuté pendant le processus de fabrication de la soupape.

10. Procédé selon l'une au moins des revendications précédentes, **caractérisé en ce que** l'ajustage est exécuté d'abord à l'extérieur d'un objet (1, 2), et après montage de l'appareil de réglage dans l'objet, un ajustage est exécuté à l'intérieur de l'objet dans lequel est utilisé l'appareil de réglage, ajustage qui repose également sur la mesure de propriétés électromécaniques.

11. Procédé selon l'une au moins des revendications précédentes, **caractérisé en ce que** l'ajustage est utilisé à l'extérieur de l'objet pour compenser l'influence de tolérances sur la caractéristique de courant d'ouverture, lesquelles reposent en particulier sur une courbe force-course différente des éléments de rappel.

12. Dispositif d'ajustage pour la fabrication et/ou l'ajustage mécanique d'un appareil de réglage à commande électromagnétique, en particulier d'une soupape pneumatique ou hydraulique, comprenant une bobine d'excitation électromagnétique (6) qui fait partie du dispositif d'ajustage et un logement, permettant l'insertion d'un appareil de réglage pouvant être commandé de manière électromagnétique par la bobine d'excitation et qui comprend au moins un induit (7), un poussoir (8) déplacé et un dispositif d'actionnement de soupape (4, 5, 6), l'induit pouvant être déplacé par le courant de bobine d'excitation pour l'ouverture et/ou la fermeture de l'appareil de réglage, **caractérisé en ce que** le dispositif d'ajustage comprend un circuit de régulation dans lequel la valeur réelle est une propriété électromagnétique de l'appareil de réglage qui peut être inséré dans le dispositif d'ajustage, et par la grandeur de réglage peut être réglée au moins une propriété mécanique de l'appareil de réglage.

13. Dispositif d'ajustage selon la revendication 12, **caractérisé en ce que** la grandeur de réglage détermine la distance (X, $\Delta$X) de la fixation de réception du produit à presser d'un dispositif à presse.

14. Dispositif d'ajustage selon la revendication 12 ou 13, **caractérisé en ce qu'**avec celui-ci est mis en oeuvre le procédé selon l'une au moins des revendications 1 à 11.

Fig. 1

EP 1 651 485 B1

11  4  7  15  5  6

a)

27

b)

4  7  5  9  8  6

27

15

c)

11  4  7  5  6

27  d  22

Fig. 2

**Fig. 3**

EP 1 651 485 B1

24

$\mu C$

$\dfrac{\Delta X}{\Delta t}$

20

12

$X = X - \dfrac{\Delta X}{\Delta t}\,\Delta t$  X

15

23

26

| $U_{ind}$ | $\int U_{ind}$ |
|-----------|----------------|
| $I_{halt}$ | $I_{\ddot{o}ff}$ |

25

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0813481 B1
- WO 0233425 A1
- WO 0198124 A1